# EUROPÄISCHE PATENTANMELDUNG

(11) **EP 1 610 555 A1**
(43) Veröffentlichungstag der Anmeldung: **28.12.2005**
(21) Anmeldenummer: 04014936.1
(22) Anmeldetag: 25.06.2004
(51) Int. Cl.: H04N 7/14

(54) **Kamera zum Aufnehmen eines Objektes vor einem Bildschirm**

(71) Anmelder: Franz, Heinz-Günther, D-22359 Hamburg (DE)
(72) Erfinder: Franz, Heinz-Günther, D-22359 Hamburg (DE)
(74) Vertreter: Grimm, Christian

(57) **Zusammenfassung**

Es wird bereitgestellt eine Kamera zum Aufnehmen eines Objekts vor einem Bildschirm und insbesondere zum Bildfemsprechen, mit einem Bildsensor (3), einem vom Bildsensor (3) beabstandeten Umlenkelement (10) und einem Träger (5), der das Umlenkelement (10) trägt, wobei die Kamera (1) einen Betriebszustand aufweist, in dem der Träger (5) das Umlenkelement (10) vor der Bildschirmfläche (7) hält und selbst zumindest teilweise vor der Bildschirmfläche (7) liegt, wobei der vor der Bildschirmfläche liegende Teil des Trägers (5) transparent ist und der Träger (5) die räumliche Anordnung zwischen dem Umlenkelement (10) und dem Bildsensor (3) so festlegt, daß das Umlenkelement (10) eine Umlenkung des Aufnahmestrahlengangs (S) vom Objekt (13) zum Bildsensor (3) bewirkt.

## Beschreibung

Die vorliegende Erfindung betrifft eine Kamera zum Aufnehmen eines Objektes vor einem Bildschirm und insbesondere zum Bildfernsprechen (z.B. Videokonferenzen und Bildtelefonie).

Solche Kameras werden für das Bildfernsprechen häufig am oberen Rand eines das Bild des Gesprächspartners zeigenden Bildschirmes befestigt, so daß die Kamera den vor dem Bildschirm sitzenden Teilnehmer schräg von oben aufnimmt. Dies führt dazu, daß der Teilnehmer in der Regel nicht in die Kamera blickt, und somit der Gesprächspartner, dem dieses Kamerabild übertragen wird, den Eindruck gewinnt, als ob ihn der Teilnehmer beim Sprechen nicht direkt ansehe.

In der DE 28 33 541 A1 ist die Anordnung eines Kameraobjektivs im Bereich eines Bildschirms, insbesondere für ein Fernsehtelefon, beschrieben, wobei eine optische Übertragungsleitung so vor dem Bildschirm angeordnet ist, daß ein Ende der Übertragungsleitung im Bereich des Bildschirms liegt. Über das Ende der Übertragungsleitung wird die Bildinformation des aufzunehmenden Bildes in die Übertragungsleitung eingekoppelt und dann über die Übertragungsleitung zu einer neben dem Bildschirm angeordneten Kamera übertragen. Die optische Übertragungsleitung weist eine Vielzahl von Linsen auf, die entweder in einem Tubus angeordnet sind oder die direkt auf die Bildschirmfläche geklebt sind, wenn der Tubus weggelassen wird. In beiden Fällen besteht ein Nachteil darin, daß durch die optische Übertragungsleitung ein großer Teil des Bildschirms bedeckt wird, so daß für den Betrachter in störender Weise Bildinformationen in diesem Teil des Bildschirms nicht erfaßt werden können. Ferner ist das Aufkleben der einzelnen Linsen auf die Bildschirmfläche sehr aufwendig und kostenintensiv.

Ausgehend hiervon ist es Aufgabe der Erfindung, eine Kamera zum Aufnehmen eines Objektes vor einem Bildschirm bereitzustellen, welche die beschriebenen Nachteile überwindet.

Erfindungsgemäß wird die Aufgabe gelöst durch eine Kamera zum Aufnehmen eines Objektes vor einem Bildschirm und insbesondere zum Bildfernsprechen, mit einem Bildsensor, einem vom Bildsensor beabstandeten Umlenkelement und einem Träger, der das Umlenkelement trägt, wobei die Kamera einen Betriebszustand aufweist, in dem der Träger das Umlenkelement vor der Bildschirmfläche hält und selbst zumindest teilweise vor der Bildschirmfläche liegt, wobei der im Betriebszustand vor der Bildschirmfläche liegende Teil des Trägers transparent ist und der Träger die räumliche Anordnung zwischen dem Umlenkelement und dem Bildsensor so festlegt, daß das Umlenkelement eine Umlenkung des Aufnahmestrahlengangs vom Objekt zum Bildsensor bewirkt.

Durch die transparente Ausbildung des Teils des Trägers, der vor der Bildschirmfläche liegt, verdeckt der Träger, selbst wenn er direkt vor einem Bildschirm positioniert ist, keine Bildinhalte, da er für einen Betrachter durchsichtig ist. Lediglich im Bereich des Umlenkelementes kann es zu Abdeckungen kommen. Das Umlenkelement ist jedoch so klein, daß dies von dem Betrachter nicht als störend wahrgenommen wird.

Der Träger dient bei der erfindungemäßen Kamera somit im wesentlichen als eine mechanische Trageinheit, mittels der das Umlenkelement an einer beliebigen Stelle vor der Bildschirmfläche positioniert werden kann. Aufgrund der transparenten Ausbildung des Teils des Trägers, der vor der Bildschirmfläche liegt, kann das Umlenkelement quasi "schwebende" vor der Bildschirmfläche positioniert werden.

Ferner stellt der Träger im Betriebszustand der Kamera die räumliche Anordnung zwischen dem Umlenkelement und dem Bildsensor sicher, so daß die Umlenkung, insbesondere eine Faltung des Aufnahmestrahlengangs realisiert werden kann. Dadurch kann die Kamera so ausgebildet werden, daß in ihrem Betriebszustand der Bildsensor nicht vor der Bildschirmfläche liegt. Der Bildsensor liegt z.B. neben oder hinter der Bildschirmfläche. Damit führt der Bildsensor nicht zu einer unterwünschten Abdeckung von Bildschirminhalten. Besonders bevorzugt ist es, wenn der Bildsensor direkt oder über zumindest ein Zwischenelement mechanisch mit dem Träger verbunden ist.

Mit der erfindungsgemäßen Kamera ist es somit möglich, das Umlenkelement an einer beliebigen Stelle vor der Bildschirmfläche zu positionieren, so daß bei Verwendung der Kamera für Bildfernsprechen die Kamera einen vor dem Bildschirm sitzenden Teilnehmer direkt von vorne (beispielsweise auf Augenhöhe) aufnehmen kann. Wenn dieses Bild dem Gesprächspartner übermittelt wird, entsteht der Eindruck, als ob der Benutzer den Gesprächspartner direkt anblickt. Auch ist bis auf den Bereich des Umlenkelementes die gesamte Bildschirmfläche für den Benutzer wahrnehmbar, so daß nahezu die gesamte Bildschirmfläche ungestört erfaßbar ist.

Die Kamera kann noch eine Optik, insbesondere eine Abbildungsoptik aufweisen, die dem Umlenkelement vor- oder nachgeordnet ist. Die Optik kann beispielsweise direkt mit dem Umlenkelement verbunden oder sogar einstückig mit dem Umlenkelement ausgebildet sein. Bei der Optik kann es sich z.B. um eine Mikrooptik oder eine sonstige abbildende Optik handeln. Die Optik ermöglicht eine Bildaufnahme mit hoher Qualität. Natürlich kann die Optik oder eine zusätzliche Abbildungsoptik auch direkt vor dem Bildsensor angeordnet sein.

In einer bevorzugten Ausführungsform ist das Umlenkelement einstückig mit dem Träger ausgebildet. Dies führt zu einer vereinfachten Fertigung der Kamera, da weniger Einzelteile herzustellen sind und auch keine Justierung zwischen Umlenkelement und Träger mehr notwendig ist.

Ferner kann das Umlenkelement eine Umlenkfläche aufweisen, die teiltransparent ausgebildet ist, so daß ein Benutzer durch das Umlenkelement hindurch den dahinter liegenden Bereich der Bildschirmfläche wahrnehmen kann. Dieser Bereich ist dann zwar in der Regel mit etwas geringerer Helligkeit erfaßbar, jedoch sind in diesem Fall im Betriebszustand der Kamera Bildinhalte auf der gesamten Bildschirmfläche für den Benutzer wahrnehmbar.

Das Umlenkelement ist beispielsweise als Umlenkprisma realisiert, dessen Umlenkseite verspiegelt sein kann. Es ist auch möglich, das Prisma so auszubilden, daß die Umlenkung aufgrund einer inneren Totalreflexion stattfindet. Des weiteren kann als Umlenkelement natürlich auch ein Spiegel eingesetzt werden oder jedes sonstige optische Element, das die gewünschte Umlenkung, insbesondere Faltung des Aufnahmestrahlengangs im Betriebszustand der Kamera bewirkt.

Der Träger kann flexibel oder biegsam sein und beispielsweise als eine dünne transparente Folie ausgebildet sein, die für den Betriebszustand der Kamera auf die Bildschirmfläche aufgelegt wird und auf dieser haftet. Die Folie kann dabei auf dem gesamten Bildschirm oder nur auf Teilen des Bildschirms liegen.

Alternativ ist es möglich, den Träger starr auszubilden. Der Träger ist dann z.B. stabförmig. In diesem Fall wird in der Regel nur ein kleiner Teil der Bildschirmfläche von dem transparenten Abschnitt des Stabes im Betriebszustand der Kamera bedeckt, so daß die nicht bedeckten Bildschirmteile auf jeden Fall ohne jegliche Beeinträchtigung erfaßbar sind.

Der stabförmig Träger weist bevorzugt einen viereckigen (beispielsweise einen rechteckigen oder quadratischen) Querschnitt auf. Der Trägerquerschnitt kann aber auch rund oder oval sein. Ferner sind polygone Querschnittsformen möglich. Insbesondere ist der Träger als Vollstab ausgebildet, beispielsweise aus Glas oder transparentem Kunststoff. Alternativ kann der Träger als Hohlstab realisiert sein. Dann ist er bevorzugt aus mehreren transparenten Seitenteilen zusammengesetzt.

Die Kamera kann so ausgebildet sein, daß in ihrem Betriebszustand der Aufnahmestrahlengang durch zumindest einen Teil des Trägers verläuft. In diesem Fall weist der Träger jedoch bevorzugt keine abbildenden Eigenschaften auf.

Alternativ ist es möglich, daß der Aufnahmestrahlengang im Betriebszustand der Kamera nicht durch den Träger verläuft. Dann können beispielsweise äußerst dünne Träger verwendet werden, auf die das Umlenkelement aufgesetzt ist.

Bevorzugt weist die Kamera eine Halterung auf, mit der die Kamera an einem Bildschirm (insbesondere am Bildschirmrand) befestigtbar ist, wobei mittels der Halterung die Kamera in ihrem Betriebszustand und in einen Ruhezustand, in der Träger nicht vor der Bildschirmfläche liegt, bringbar ist. Dadurch ist es möglich, die erfindungsgemäße Kamera nur dann in ihren Betriebszustand zu bringen, wenn sie auch tatsächlich benötigt wird. In der restlichen Zeit wird sie von der Halterung im Ruhezustand gehalten, so daß die Bildschirmfläche frei von jeglichen Teilen der erfindungsgemäßen Kamera ist.

Die Halterung kann insbesondere ein Drehgelenk aufweisen, so daß das Umlenkelement mit dem Träger vor die Bildschirmfläche geschwenkt werden kann. Wenn der Träger stabförmig ausgebildet ist, ist es bevorzugt, daß er sich parallel zur Bildschirmfläche erstreckt.

Die Halterung kann so ausgebildet sein, daß sie im Betriebs- und Ruhezustand jeweils in einer Betriebs- und Ruhestellung fixiert ist. Sie kann beispielsweise über einen lösbaren Rastmechanismus verfügen.

Eine bevorzugte Weiterbildung der Kamera besteht darin, daß sie eine Bewegungseinrichtung aufweist, die im Betriebszustand der Kamera den vor dem Bildschirm liegenden Teil des Trägers (und somit auch das Umlenkelement) in einem vorbestimmten Bildschirmbereich hinund herbewegt. Der Bildsensor wird dabei bevorzugt mit dieser Hin- und Herbewegung so synchronisiert, daß er immer (nur) dann ein Bild aufnimmt, wenn sich das Umlenkelement an einer vorbestimmten Stelle (beispielsweise in der Mitte des Bildschirms) befindet. Die Hin- und Herbewegung wird so durchgeführt, daß für den Benutzer die gesamte Bildschirmfläche wahrnehmbar ist und keinerlei Abdeckung mehr durch das Umlenkelement erfolgt. In dieser Ausführungsform kann insbesondere der Träger selbst nicht transparent sein. Die Transparenz des Trägers wird im Betriebszustand durch die Bewegung des Trägers erreicht, d.h., daß durch die Hin- und Herbewegung der Benutzer die gesamte Bildschirmfläche erfassen kann, und somit für den Benutzer der eigentlich nicht transparente Träger dann transparent erscheint.

Die Bewegungseinrichtung kann beispielsweise ein Drehgelenk mit Motorantrieb umfassen. Wenn der Träger stabförmig ausgebildet ist, bewegt sich dann das Umlenkelement auf einem Kreisbogenabschnitt bzw. wird vom Träger ein Kreissegment überstrichen.

Die Aufgabe wird ferner gelöst durch eine Kamera zum Aufnehmen eines Objektes vor einem Bildschirm und insbesondere zum Bildfernsprechen, mit einem Bildsensor und einem Träger, der den Bildsensor trägt, wobei die Kamera einen Betriebszustand aufweist, in dem der Träger den Bildsensor vor der Bildschirmfläche hält und selbst zumindest teilweise vor der Bildschirmfläche liegt, wobei der im Betriebszustand vor der Bildschirmfläche liegende Teil des Trägers transparent ist. Da der Teil des Trägers, der im Betriebszustand der Kamera vor der Bildschirmfläche liegt, transparent ist, werden keine Bildinhalte verdeckt. Lediglich im Bereich des Bildsensors kann es zu einer Abdeckung kommen. Da der Bildsensor jedoch sehr klein ist, wird dies von einem Benutzer nicht als störend wahrgenommen.

Bevorzugt trägt der Träger mehrere Drähte, über die Daten des Bildsensors zu einer Auswerteeinheit der Kamera geführt werden. Diese Drähte können so dünn ausgebildet werden, daß sie zu keiner wesentlichen Sichtbeeinträchtigung führen, so daß der Träger immer noch als transparent anzusehen ist.

In einer Weiterbildung der Kamera ist dem Bildsensor eine Abbildungsoptik vorgeordnet. Damit läßt sich die Qualität der aufgenommen Bilder erhöhen.

Als Bildsensor wird bevorzugt ein CCD-Sensor, der monochromatische oder polychromatische Bilder aufnehmen kann, eingesetzt.

Die Kamera kann so ausgebildet sein, daß in ihrem Betriebszustand der Aufnahmestrahlengang durch zumindest ein Teil des Trägers oder nicht durch den Träger verläuft.

Ferner kann der Träger stabförmig ausgebildet sein und sich im Betriebszustand bevorzugt parallel zur Bildschirmfläche erstrecken. Es ist auch möglich, daß der Träger starr ist. Auch kann die Kamera die bereits beschriebene Halterung umfassen. Ferner kann die Halterung ein Drehgelenk aufweisen, so daß der Träger vor die Bildschirmfläche schwenkbar ist. Das Drehgelenk kann einen Einrastmechanismus enthalten, so daß der Träger im Betriebs- und Ruhezustand jeweils in einer Betriebs- und Ruhestellung arretiert ist.

Gemäß einer Weiterbildung dieser Kamera, bei der der Träger den Bildsensor im Betriebszustand von der Bildschirmfläche hält, ist die oben beschriebene Bewegungseinrichtung vorgesehen. Mit der Bewegungseinrichtung wird im Betriebszustand der Kamera der vor dem Bildschirm liegende Teil des Trägers (und damit auch der Bildsensor) in einem vorbestimmten Bildschirmbereich hin- und herbewegt. Ein Bildschirmbereich wird somit überstrichen, wobei die Hin- und Herbewegung so durchgeführt wird, daß für den Benutzer der Bildschirmbereich sichtbar ist. Somit ist der Träger und der Bildsensor im Betriebszustand für den Benutzer transparent. Es können sogar nicht transparente Träger in diesem Fall eingesetzt werden.

Natürlich kann auch der gesamte Träger transparent ausgebildet sein.

Erfindungsgemäß wird noch ein Teilnahmegerät für das Bildfernsprechen bereitgestellt, wobei das Teilnahmegerät die erfindungsgemäße Kamera (oder eine bevorzugte Weiterbildung der erfindungsgemäßen Kamera), einen Bildschirm sowie eine Halterung für die Kamera aufweist, wobei mittels der Halterung die Kamera in ihren Betriebszustand und in einen Ruhezustand, in dem der Träger nicht vor der Bildschirmfläche liegt, bringbar ist. Mit diesem Teilnahmegerät kann somit der Träger nur dann vor dem Bildschirm positioniert werden, wenn ein Bildfernsprechen (beispielsweise bei einer Videokonferenz oder einem Bildtelefongespräch) durchgeführt werden soll. Wenn die Kamera nicht benötigt wird, kann sie in den Ruhezustand gebracht werden, so daß keinerlei Beeinträchtigung der Sicht auf den Bildschirm vorliegt.

Bevorzugt ist die Halterung am Bildschirm selbst befestigt (beispielsweise am Bildschirmrahmen). Damit läßt sich ein äußert kompaktes Teilnahmegerät verwirklichen.

Die Erfindung wird nachfolgend beispielshalber anhand der Zeichnungen noch näher erläutert. In den Figuren zeigen:
- Fig. 1: eine schematische Ansicht der erfindungsgemäßen Kamera in ihrer Betriebsstellung vor einem Bildschirm;
- Fig. 2: eine schematische Ansicht von unten auf die Kamera der Fig. 1;
- Fig. 3: eine vergrößerte Ausschnittsdarstellung des vorderen Endes des Trägers gemäß der Ausführungsform der Figur 2;
- Fig. 4: eine Ansicht gemäß Fig. 3 des vorderen Endes einer alternativen Ausführungsform der Kamera;
- Fig. 5: die erfindungsgemäße Kamera am Bildschirm eines Notebooks in Betriebsstellung, und
- Fig. 6: die erfindungsgemäße Kamera am Bildschirm des Notebooks der Fig. 5 in Ruhestellung.

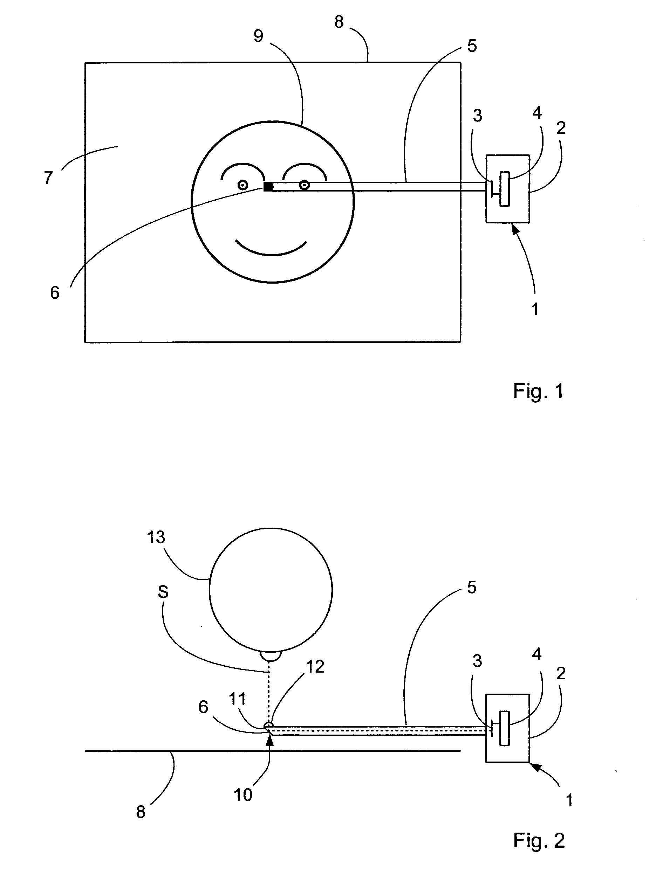

Wie in Fig. 1 gezeigt ist, umfaßt eine Kamera 1 gemäß einer ersten Ausführungsform eine Bildaufnahmeeinheit 2, in der ein Bildsensor 3 (z.B. CCD-Chip) sowie eine mit dem Bildsensor 3 verbundene Auswerteeinheit 4 angeordnet sind.

An der Bildaufnahmeeinheit 2 ist ein stabförmiger Träger 5 befestigt, dessen der Bildaufnahmeeinheit 2 abgewandetes vorderes Ende 6 mittig vor der Bildfläche 7 eines Bildschirms 8 positioniert ist. Der Träger 5 ist hier aus einem transparenten Material, wie zum Beispiel Glas oder einem transparenten Kunststoff gebildet. Auf der Bildfläche 7 ist beispielsweise ein Gesprächsteilnehmer 9 einer Videokonferenz dargestellt, wie dies schematisch in Fig. 1 angedeutet ist.

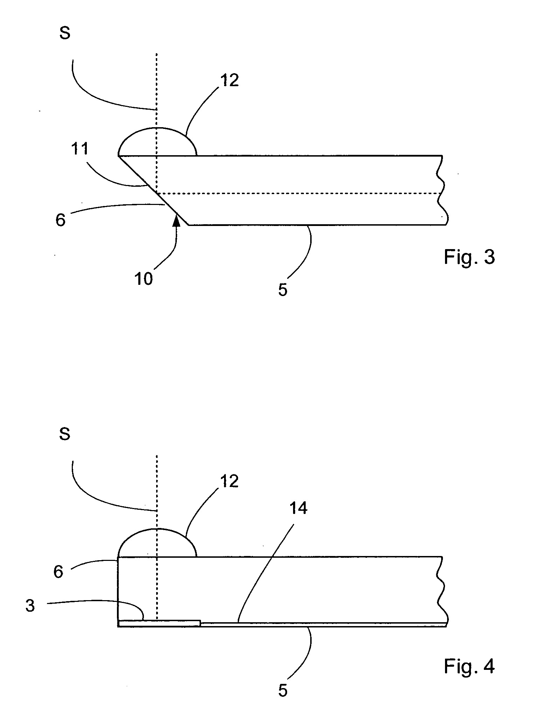

Wie am besten aus Fig. 2 und 3 ersichtlich ist, ist das vordere Ende 6 als ein Umlenkprisma 10 ausgebildet, das eine Umlenkseite 11 aufweist, die verspiegelt ist. Dem Prisma ist eine Optik 12 vorgeordnet, die hier eine Abbildungsoptik ist und schematisch als Plankonvexlinse dargestellt ist.

Insbesondere der Darstellung in Fig. 2 ist zu entnehmen, daß mittels dem Umlenkprisma 10 eine Faltung und damit eine Umlenkung des Aufnahmestrahlenganges S von einem Benutzer 13, der vor dem Bildschirm sitzt, zum Bildsensor 3 um 90° bewirkt wird, so daß die Kamera 1 den Benutzer 13 frontal von vome aufnimmt. Der Benutzer 13 wird somit so aufgenommen, als ob er dem Gesprächsteilnehmer 9 direkt in die Augen blickt.

Aufgrund der transparenten Ausbildung des Trägers 5 wird erreicht, daß auch die hinter dem Träger 5 liegenden Abschnitte der Bildschirmfläche 7 für den Benutzer 13 erfaßbar sind. Lediglich der kleine Bereich direkt hinter den Umlenkprismen 10 ist nicht sichtbar. Damit kann der Benutzer 13 nahezu die gesamte Bildschirmfläche 7 betrachten und wird so aufgenommen, als ob er seinem Gesprächspartner 9 in die Augen blickt.

Die Auswerteinheit 4 kann insbesondere so ausgebildet sein, daß sie die Bilddaten des Bildsensors 3 über ein drahtgebundenes und/oder drahtloses Datennetz (wie zum Beispiel das Internet oder das Telefonnetz) Dritten zur Verfügung stellt.

In Fig. 4 ist eine weitere Ausführungsform der Kamera 1 dargestellt. Bei dieser Ausführungsform ist der Bildsensor 3 am vorderen Ende 6 des Trägers 5 direkt hinter der Abbildungsoptik 12 angeordnet (somit ist kein Umlenkprisma 10 am vorderen Ende 6 ausgebildet). Ansonsten entspricht der Träger 5 im wesentlichen dem der obigen Ausführungsform. Zusätzlich sind einige Leitungen 14 vorgesehen, die entlang der Längsrichtung des Trägers 5 bis zur Auswerteeinheit 4 im Bildaufnahmeabschnitt 2 verlaufen (nicht gezeigt). Die Leitungen 14 sind so dünn, daß der Träger 5 mit den Leitungen 14 immer noch im wesentlichen transparent ist, so daß die Bildabschnitte, die hinter dem Träger 5 liegen, für den Benutzer 13 erfaßbar sind.

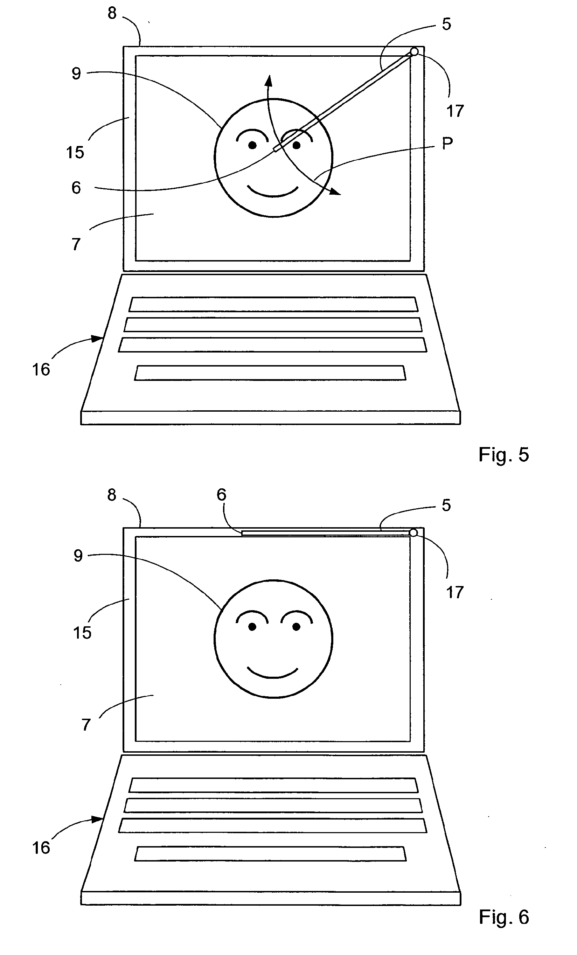

In den Fig. 5 und 6 ist eine Ausbildung der Kamera 1 gezeigt, die am Rahmen 15 des Bildschirms 8 eines Notebooks 16 (tragbarer Computer) befestigt ist. Die Kamera 1 ist dabei über ein Drehgelenk 17 so am Bildschirm 8 befestigt, daß der stabförmige Träger 5 drehbar in einer Ebene parallel zur Bildschirmfläche 7 liegt. In dem Drehgelenk 17 sind der Bildsensor 3 und die Auswerteeinheit 4 angeordnet (in Fig. 5 und 6 nicht gezeigt). Das Drehgelenk 17 ist so ausgebildet, daß der Träger 5 von der in Fig. 6 gezeigten Stellung im Ruhezustand in die in Fig. 5 gezeigte Betriebsstellung des Betriebszustandes verschwenkt werden kann. Bei der Betriebsstellung von Fig. 5 liegt dann das vordere Ende 6 im wesentlichen in der Mitte der Bildschirmfläche 7. Somit ist ein Teilnahmegerät für ein Bildfernsprechen bereitgestellt.

Das Drehgelenk 17 ist bevorzugt so ausgebildet, daß es in der Ruhe- und in der Betriebsstellung jeweils arretierbar ist.

Das Drehgelenk 17 kann einen Motorantrieb aufweisen. Insbesondere kann mittels dem Motorantrieb im Betriebszustand der Träger 5 vor einem Teil der Bildschirmfläche 7 hin- und herbewegt werden, wie dies durch den Doppelpfeil P in Fig. 5 angedeutet ist. Der Bildsensor 2 nimmt dann immer nur ein Bild auf, wenn der Träger 5 sich in der Fig. 5 gezeigten Position befindet. Durch diese Hin- und Herbewegung ist für den Benutzer 13 die gesamte Bildschirmfläche ohne eine Abschattung durch den Träger 5 und das Umlenkelement 10 oder den Bildsensor 2 erfaßbar.

Natürlich kann die Kamera 1 lösbar oder fest mit dem Rahmen 15 verbunden sein. Ferner ist es möglich, die Kamera 1 an anderen Abschnitten des Bildschirms 8 oder des Notebooks 16 zu befestigen oder mit einem eigenen Tragegestell (nicht gezeigt) zu versehen.

## Patentansprüche

1. Kamera zum Aufnehmen eines Objekts vor einem Bildschirm und insbesondere zum Bildfernsprechen, mit einem Bildsensor (3), einem vom Bildsensor (3) beabstandeten Umlenkelement (10) und einem Träger (5), der das Umlenkelement (10) trägt,
wobei die Kamera (1) einen Betriebszustand aufweist, in dem der Träger (5) das Umlenkelement (10) vor der Bildschirmfläche (7) hält und selbst zumindest teilweise vor der Bildschirmfläche (7) liegt, wobei der vor der Bildschirmfläche liegende Teil des Trägers (5) transparent ist und der Träger (5) die räumliche Anordnung zwischen dem Umlenkelement (10) und dem Bildsensor (3) so festlegt, daß das Umlenkelement (10) eine Umlenkung des Aufnahmestrahlengangs (S) vom Objekt (13) zum Bildsensor (3) bewirkt.

2. Kamera nach Anspruch 1, bei der im Betriebszustand der Kamera (1) der Bildsensor (3) nicht vor der Bildschirmfläche (7), sondern bevorzugt neben oder hinter der Bildschirmfläche (7) liegt, und/oder bei der dem Umlenkelement (10) eine Optik, insbesondere eine Abbildungsoptik (12) vor- oder nachgeordnet ist.

3. Kamera nach einem der obigen Ansprüche, bei der das Umlenkelement (10) einstückig mit dem Träger (5) und/oder teiltransparent ausgebildet ist.

4. Kamera zum Aufnehmen eines Objekts vor einem Bildschirm und insbesondere zum Bildfernsprechen, mit einem Bildsensor (3) und einem Träger (5), der den Bildsensor (3) trägt, wobei die Kamera (1) einen Betriebszustand aufweist, in dem der Träger (5) den Bildsensor (3) vor der Bildschirmfläche (7) hält und selbst zumindest teilweise vor der Bildschirmfläche (7) liegt, wobei der vor der Bildschirmfläche (7) liegende Teil des Trägers (5) transparent ist.

5. Kamera nach Anspruch 4, bei der der Träger (5) mehrere Drähte (14) führt, über die Daten des Bildsensors (3) zu einer Auswerteeinheit (4) der Kamera (1) übertragen werden, und/oder bei der dem Bildsensor (3) eine Abbildungsoptik (12) vorgeordnet ist

6. Kamera nach einem der obigen Ansprüche, bei der im Betriebszustand der Aufnahmestrahlengang (S) vom Objekt (13) zum Bildsensor (3) durch zumindest einen Teil des Trägers (5) oder nicht durch den Träger (5) erfolgt.

7. Kamera nach einem der obigen Ansprüche, bei der der Träger (5) stabförmig ausgebildet ist und sich im Betriebszustand bevorzugt parallel zur Bildschirmfläche (7) erstreckt.

8. Kamera nach einem der obigen Ansprüche, bei der der Träger (5) starr ausgebildet ist und/oder bei der die Kamera (1) eine Halterung (17) aufweist, mit der die Kamera (1) am Bildschirm (8) befestigtbar ist, wobei mittels der Halterung (17) die Kamera (1) in ihren Betriebszustand und in einen Ruhezustand, in dem der Träger (5) nicht vor der Bildschirmfläche (7) liegt, bringbar ist.

9. Kamera nach einem der obigen Ansprüche, die eine Bewegungseinrichtung (17) aufweist, die im Betriebszustand der Kamera den vor dem Bildschirm liegenden Teil des Trägers in einem vorbestimmten Bildschirmbereich hin- und herbewegt.

10. Teilnehmergerät für Bildfernsprechen, mit
einer Kamera (1) nach einem der Ansprüche 1 bis 9, einem Bildschirm (8) sowie einer Halterung (17), wobei mittels der Halterung (17) die Kamera (1) in ihren Betriebszustand und in einen Ruhezustand, in der der Träger (5) nicht vor der Bildschirmfläche (7) liegt, bringbar ist.

11. Teilnehmergerät nach Anspruch 10, bei dem die Halterung (17) am Bildschirm (8) befestigt ist und/oder bei der die Halterung (17) ein Drehgelenk aufweist, so daß der Träger (5) vor die Bildschirmfläche (7) schwenkbar ist.
